# EUROPEAN PATENT SPECIFICATION

(11) **EP 4 495 644 B1**
(45) Date of publication and mention of the grant of the patent: **02.09.2026**
(21) Application number: 23186475.2
(22) Date of filing: 19.07.2023
(51) Int. Cl.: G02B 6/26, G02B 6/293, B23K 26/08

(54) **FABRICATION OF A MIRROR FOR AN OPTICAL CAVITY**
HERSTELLUNG EINES SPIEGELS FÜR EINEN OPTISCHEN RESONATOR
FABRICATION D'UN MIROIR POUR UNE CAVITÉ OPTIQUE

(43) Date of publication of application: 22.01.2025
(73) Proprietor: Qlibri GmbH, 80337 München (DE)
(72) Inventor: Förg, Michael, 82110 Germering (DE); Hümmer, Thomas, 86163 Augsburg (DE); Noé, Jonathan, 80337 Munich (DE)
(74) Representative: Hofstetter, Schurack & Partner

(56) References cited:
- EP-A1- 3 096 163
- JP-A- 2013 241 301
- US-A1- 2008 185 365
- OTT KONSTANTIN ET AL: "Millimeter-long fiber Fabry-Perot cavities", OPTICS EXPRESS, vol. 24, no. 9, 27 April 2016 (2016-04-27), US, pages 9839 - 9853, XP093115368, ISSN: 1094-4087, DOI: 10.1364/OE.24.009839

## Description

The present invention is directed to a method for at least partial fabrication of a mirror for an optical cavity and to a fabrication arrangement for at least partial fabrication of a mirror for an optical cavity.

Optical cavities formed by two opposing mirrors are known as tools to enhance the interaction between light and matter by forming an optical resonator. In general, only light with certain wavelengths may pass, enter or transmit the resonator, in which case the light is said to be in resonance with the optical cavity, while other wavelengths are blocked. The spectral separation between wavelengths that may pass the cavity is denoted as free spectral range, FSR, and is mainly determined by a distance between the two opposing mirrors forming the resonator.

For macroscopic cavities, where the mirror separation is large compared to the wavelength of light, the corresponding FSR is relatively small. For microscopic cavities, however, the cavity length approaches the order of magnitude of the wavelength of light and correspondingly the FSR attains larger values. In such scenarios, individual cavity resonances may be singled out by optical filtering techniques. When investigating samples that are introduced into the microscopic cavity, the properties of such individual resonances are of interest. The publication D. Hunger et al.: "A fiber Fabry-Perot cavity with high finesse." New Journal of Physics 12, 065038 (2010) describes a fiber-based Fabry-Perot micro-cavity with CO2 laser-machined mirrors.

In the publication D. Hunger et al.: "Laser micro-fabrication of concave, low-roughness features in silica", AIP Advances 2, 012119 (2012), the authors describe a micro-fabrication method to create concave features in silica, either on optical fibers or on flat substrates. The machining uses a single CO₂ laser pulse train. Therein, evaporation removes material while a melt layer produces high surface quality. The method allows fabrication of micro-optical devices such as mirror substrates for high-finesse cavities or negative lenses on fiber tips.

The article K. Ott et al.: "Millimeter-long fiber Fabry-Perot cavities", OPTICS EXPRESS, vol. 24, no. 9, pp. 9839-9853 discusses Fabry-Perot cavities with concave mirrors. A laser dot machining technique is used to shape spherical mirrors and single-mode fibers with large mode area are employed. In a corresponding CO₂ dot milling setup, precision translation stages are used to control a CO₂ laser beam position on a fiber and to translate the fiber to an optical profiler position for surface characterization. A spherical surface machined on a single mode fiber is depicted in terms of a surface profile measured by phase-shifting. The machining setup is designed to enable surface machining with multiple shots. It comprises a CO₂ laser with external pulsing and focusing optics, a high-precision, three-axis translation stage, and an in-situ optical profilometer. The setup is enclosed in a temperature-stabilized laminar flow box.

For the fabrication of mirrors for microscopic cavities, the removal of material has to take place with a high accuracy, for example of a few nanometers, to be able to create the desired shape of the mirror surface. This places high demands on the stability and reproducibility of the fabrication system.

It is an objective of the present invention to provide an improved concept for fabricating mirrors for microscopic cavities at least partially, which increases the achievable accuracy of a surface profile defining the mirror surface.

This objective is achieved by the respective subject matter of the independent claims. Further implementations and preferred embodiments are subject matter of the dependent claims.

The invention is based on the idea to combine the use of a quantum cascade laser for removing material from a surface to processed of an optical substrate, for example from an end facet of an optical fiber, with a multi-shot sequence when applying the laser radiation.

According to the invention, a method for at least partial fabrication of a mirror for an optical cavity, in particular a microscopic optical cavity, is provided. Therein, a surface to be processed of an optical substrate is positioned in an operating plane, which is equal to or parallel to a focal plane of a laser arrangement. A concave surface profile of the surface is generated by applying a sequence of multiple laser shots to the positioned surface by using a quantum cascade laser, QCL, of the laser arrangement.

Here and in the following, light may be understood such that it comprises electromagnetic waves in the visible range, in the infrared range and/or in the ultraviolet range. Accordingly, the expression optical may be understood to be related to light according to this meaning.

The optical substrate is, in particular, suitable for optical purposes. It can, however, also be denoted simply as substrate. The optical substrate is not necessarily transparent or permeable for light. However, in some implementations, the optical substrate may be permeable at least for light with a wavelength within one or more target wavelength ranges, which may depend on the desired application and/or properties of the optical cavity. For example, the optical substrate may be permeable for light with a wavelength in the range [280 nm, 3000 nm] or within one or more sub-ranges, such as [600 nm, 900 nm], and/or individual wavelengths therein, for example, 780 nm.

The optical substrate being permeable to light of a certain wavelength may be understood such that light of said wavelength may pass through the material of the optical substrate. In particular, the material of the optical substrate may be considered transparent for the light. Obviously, however, the permeability of the material of the optical substrate for the light does not mean that the transmission coefficient for the light is necessarily equal to 100 %. Rather, the transmission coefficient depends on the emission wavelength spectrum and the exact choice of the material composition as well geometrical properties of the optical substrate.

The transmission coefficient may for example be understood as an inverse ratio of a light intensity of light entering the material of the optical substrate to the intensity of the light leaving the material of the optical substrate on an opposite side. For example, the optical substrate can be considered permeable for light of a certain wavelength, if the transmission coefficient is 50 % or larger, for example 80 % or larger, in particular 85 % or larger, preferably 90 % or larger.

The optical substrate may, in particular, comprise or consist of silicon dioxide, also denoted as silica, or a plastic material. The optical substrate may for example be a flat substrate or plane. For example, flat substrates with a thickness in the range [100 µm, 6 mm] and lateral dimensions in the range [100µm, 40 mm] may be used.

However, in alternative implementations, the optical substrate is an optical fiber and the surface to be processed is an end facet of the optical fiber.

The optical fiber may be a single-core fiber comprising exactly one fiber core. In other implementations, the optical fiber may be a dual-core fiber comprising exactly two fiber cores or a multi-core fiber comprising more than two fiber cores. For example, the fiber core or fiber cores of the optical fiber have a diameter in the range [2 µm, 600 µm] or in the range [4 µm, 120 µm]. For example, the fiber core may be surrounded by a cladding layer. The optical fiber may also be a photonic-crystal fiber in some implementations.

The laser arrangement comprises, in particular, the QCL and respective optical components for focusing and/or beam shaping and/or filtering the laser light emitted by the QCL. Since, unlike for other types of laser systems, the emission wavelength of a QCL is not strictly tied to the underlying physical process, it can be tuned within certain restrictions. In particular, in the course of the method according to the invention, the wavelength of the QCL can be tuned to match specific wavelengths that are particularly suitable for removing material of the optical substrate for example by ablation and/or melt of the material. For example, the wavelength may be tuned such that predetermined absorption maxima of the material to be removed are met or approximately met.

The material to be removed from the optical substrate, in particular the optical fiber, may for example be or comprise silicon dioxide, for which an absorption maximum associated to a vibrational resonance is centered around 9.3 µm. The wavelength can then for example be tuned close to that wavelength, for example from 8 to 11 µm or from 9 to 10 µm. However, in particular for different materials of the optical substrate, also different wavelengths can be used. For tuning or changing the wavelength, different QLCs with different emission wavelength can be used or a QLC with a tunable emission wavelength.

The surface profile to be generated by the method according to the invention being concave means that at least a part of the resulting surface lies below other parts of the resulting surface. In particular, the concave surface profile comprises at least one indentation, which may also be denoted as depression or impression, even though it is not generated by means of applying mechanical pressure. In particular, while certain parts of the surface profile are concave, there may be other parts of the surface profile, which are convex or non-concave.

The multiple laser shots comprise two or more laser shots that may be applied to the same lateral position in the focal plane or to different lateral positions. In general, the multiple laser shots may comprise shots to different positions in in the operating plane, wherein one or more shots are applied to each lateral position. The laser light emitted by the QCL may be pulsed. A shot does not correspond to a single pulse but a shot commonly comprises many pulses.

According to the method for at least partial fabrication of the mirror, the concave surface profile is generated. Depending on the use case and/or the used material of the optical substrate, the processed surface profile, in particular the processed end facet of the optical fiber, may be used as a mirror surface for the optical cavity. In this case, the method can be considered as a method for fabricating the mirror. However, in other cases, further processing of the processed surface, in particular the end facet, and the generated surface profile may be required to achieve the desired optical properties, in particular reflectivity of the mirror. To this end, for example a reflective coating may be applied to the processed surface. In this case, the method according to the invention can be considered as a method for partially fabricating the mirror or, in other words, a method for preparing the optical substrate for the fabrication of the mirror.

Combining the application of multiple laser shots with the usage of a QCL has several advantages, in particular compared to a single shot approach and/or to using a CO₂-laser for processing the surface. In a single shot approach, a depression is generated by applying a single laser shot to the surface. The resulting depression or indentation typically has an approximately Gaussian shape. This, on the one hand, limits the achievable shapes of the surface profile and, for example, prevents from realizing for example circular or parabolic profiles. Such circular or parabolic or also other types of profiles may, however, be particularly suitable for the application in an optical microscopic cavity. In general, the ability to adapt the actual profile shape to the specific requirements is desirable but not feasible using a single shot approach. Furthermore, the radius or lateral extension of the indentation and the depth of the generated indentations are more or less strictly linked to each other when using a single shot approach. In other words, indentations that are large in lateral direction also have a relatively large depth in longitudinal direction and the other way around for small or shallow indentations. This also leads to non-optimal surface profiles for microscopic optical cavities. These drawbacks are overcome by applying the multiple laser shots at one or more lateral positions.

However, the multi shot approach comes with increased demands regarding the stability and reproducibility of the fabrication arrangement, in particular the laser arrangement. For example, minimal variations, for example in the environmental temperature, may lead to mode jumps in gas lasers like CO₂-lasers, which may lead to power variations as well as positional variations in the beam positioning. This prevents a sub-micrometer accuracy in the lateral positioning of the laser shots and therefore reduces the achievable accuracy. Power variations of the emitted laser light are very disadvantageous as well. The material ablation achieved by applying the laser shots is a highly non-linear process. Consequently, only minimal power variations may give rise to significant differences in the result. Consequently, a surface roughness of few nanometers cannot be achieved in this way. These drawbacks are overcome by combining the multi shot approach with the QCL.

Moreover, using the QCL the power absorption by the material to be removed can be concentrated much closer to the surface of the optical substrate, in particular the optical fiber or its end facet, which allows for a much more detailed or accurate removal of the material compared to a CO₂-laser.

The QCL is a solid-state laser and can be used with much less overhead compared to the CO₂-laser. In particular, there is no need for cooling the QCL, which otherwise could introduce vibrations into the fabrication arrangement affecting reproducibility and stability. Using the QCL also saves space and costs. Furthermore, the QCL can be directly controlled electronically. In addition, since the QCL can be tuned for different wavelengths, the effectivity of the material removal by means of power absorption can be increased, which leads to an overall reduced optical power to be emitted by the laser. This increases the safety for users.

Furthermore, unlike for a CO₂-laser, a QCL does not require specific optics to enable a pulsed operation for material ablation. This reduces the additional effort to set up the laser arrangement correctly and also reduces the portion of laser power that remains unused.

By means of the method according to the invention, due to the combination of QCL with the multi shot approach, a surface roughness of the surface profile in the order of 0.1 nm and an overall accuracy of the dimensions of the surface profile in the order of nanometers is achieved. The flexibility and variability of the achievable surface shapes can be increased allowing also freeform surfaces for more complex and powerful mirror geometries. In particular, hundreds or even thousands of operating points in the operating plane may be used to generate such complex surface structures.

The operating plane may be positioned more or less exactly at the focal plane of the laser arrangement. However, it may also be favorable to offset the operating plane slightly from the focal plane.

According to several implementations of the method, generating the concave surface profile comprises setting a lateral position of a focal point of the laser arrangement in a sequential manner to a plurality of operating points in the operating plane. For each of the plurality of operating points, at least one of the multiple laser shots is applied to the surface, in particular the end facet of the optical fiber.

In case of a plane substrate, the expression lateral may be understood such as to indicate a direction parallel to the plane substrate, in particular its unprocessed surface. Analogously, in case of an optical fiber, the expression lateral may be understood such as to indicate a direction perpendicular to a longitudinal direction of the optical fiber. In particular, a lateral direction is parallel to the focal plane and the operating plane.

In the first place, the focal point of the laser arrangement is positioned within the focal plane. However, since the operating plane is parallel to the focal plane, this also results in a corresponding positioning in the operating plane. In other words, each operating point in the operating plane is characterized by a corresponding projected operating point in the focal plane, which results from a perpendicular projection of the operating point from the operating plane to the focal plane. Consequently, setting the lateral position to the plurality of operating points in the operating plane may also be understood as setting the lateral position of the focal point in a sequential manner to the plurality of projected operating points in the focal plane.

The plurality of operating points comprises two or more operating points as respective predefined positions. There may also be a predefined order of the plurality of operating points provided and the sequential setting of the lateral position is carried out according to that order. For example, the number of laser shots applied to a given operating point may lie in the range [1, 10]. By applying laser shots to different lateral operating points in the sequential manner, the surface profile can be fabricated in a particularly exact way and/or particularly complex surface profiles may be achieved. By applying more than one laser shot to a single operating point, the optical power of the laser may be reduced and/or the flexibility in the depth profile of the surface may be increased.

According to several implementations, the surface to be processed, in particular the end facet, and the laser arrangement are moved laterally with respect to each other to set the lateral position of the focal point in the sequential manner to the plurality of operating points.

In particular, either the laser arrangement remains stationary and the optical fiber is moved laterally or vice versa or a combination of both.

For example, the optical substrate and/or respective components of the laser arrangement may be mounted to respective positioning stages. Such positioning stages are available, in particular for optical fibers, and allow for a very exact placement of the involved components.

Alternatively or in addition, a laser beam of the QCL is deflected by a deflection unit of the laser arrangement to set the lateral position of the focal point in the sequential manner to the plurality of operating points.

Therefore, the effort for ensuring mechanical stability of the positioner stage may be reduced. The deflection arrangement may comprise one or more mirrors that are tiltable, pivotable and/or rotatable. The one or more mirrors may also be implemented as respective micro-electrical-mechanical systems, MEMS.

According to several implementations, the plurality of operating points comprises at least 10 operating points or at least 30 operating points.

In this way, the achievable complexity and accuracy of the surface profile is increased. In particular, the total number of operating points may lie in the range [10, 2000].

According to several implementations, the plurality of operating points, in particular all operating points, lies on two or more concentric circles or on two or more concentric ellipses in the operating plane. Alternatively, the plurality of operating points comprises a center point and the remaining of the plurality of operating points lies on two or more concentric circles or on two or more concentric ellipses. The center point lies in the center of the concentric circles or ellipses.

In particular, the predefined order of the operating points may be such that, if applicable, first the center point is set and then one circle or ellipse after another is sampled starting with the innermost circle or ellipse and proceeding in radial direction away from the center. Experiments and tests have revealed that such arrangement and/or ordering of the operating points allow for a particularly accurate and consistent fabrication of the surface profile.

In other implementations, the predefined order of the operating points may be such that one circle or ellipse after another is sampled starting with the outermost circle or ellipse and proceeding in radial direction towards the center.

According to several implementations, the concave profile comprises an indentation, in particular an indentation, which is centered in a center of the optical fiber.

According to several implementations, the concave surface profile comprises two or more indentations, which are arranged according to a predefined geometric figure, in particular a predefined geometric figure in the operating plane.

For example, respective centers of the two or more indentations may be arranged according to the geometric figure. In this way, the optical properties of the mirror and the resulting optical cavity may be tuned in a very flexible manner by choosing the appropriate number and position of the indentations.

For example, the geometric figure may correspond to a polygon and the centers of the respective indentations are located at corner points of the polygon.

A respective radius of curvature at the center of the indentation or indentations may for example lie in the range [5 µm, 1000 µm]. A respective depth of the indentation or indentations may for example range from a few tens of nm to a few micrometers, for example lie in the range [10 nm, 10 µm] or in the range [100 nm, 7 µm].

According to several implementations, the concave surface profile comprises a bevel surrounding the indentation, in particular in case the optical substrate is the optical fiber and/or surface profile comprises a single indentation in the center of the optical fiber.

In particular, the bevel surrounds the indentation circumferentially and extents from an outer edge or outer boundary of the indentation to an outer edge of the optical fiber.

By providing the bevel, the lateral extension of the processed end facet of the optical fiber can be reduced. In this way, when used as a mirror for a microscopic cavity, the end facet may be positioned closer to a sample and/or may be positioned with increased flexibility.

According to several implementations, an outer contour of the indentation possess a rotational symmetry, in particular a circular symmetry or a discrete rotational symmetry, for example is circular, when viewed from a direction perpendicular to the operating plane, in particular parallel to the longitudinal direction of the optical fiber, if applicable.

This includes for example deviations from an exact rotational symmetry, which origin from processing tolerances.

According to other implementations, an outer contour of the indentation is asymmetric, in particular does not possess circular symmetry, for example is elliptic, when viewed from a direction perpendicular to the operating plane, in particular parallel to the longitudinal direction of the optical fiber, if applicable.

Such asymmetric indentation may have particular benefits in specific applications of the mirror in an optical cavity and are enabled by the combination of the multi shot approach and the QCL according to the invention.

The invention allows to more or less freely choose the intended geometry and accurately reproduce it due to the multi-shot approach in combination with the usage of the QCL.

According to several implementations, a contour of the indentation in a section plane, which is parallel to a normal axis to the surface in an unprocessed state, in particular parallel to a longitudinal axis of the optical fiber, if applicable, has a circular shape or a parabolic shape ore a Bessel shape or a Gaussian shape or a combination of that shapes. This includes for example deviations from an exact circular, parabolic, Bessel or Gaussian shape, respectively, which origin from processing tolerances.

In preferred embodiments the shape of the contour in the section plane is circular or parabolic or at least approximately circular or parabolic. The section plane, in particular, comprises the longitudinal axis in case of an optical fiber.

In particular, the circular, parabolic, Bessel and Gaussian shapes can be described by respective mathematical functions. A combination of two or more of such shapes can then for example be described by a convolution of the respective two or more mathematical functions.

According to several implementations, a further contour of the indentation in a further section plane, which is parallel to the normal axis, in particular to the longitudinal axis of the optical fiber, if applicable, and which is different from the section plane, in particular orthogonal to the section plane, has a circular shape or a parabolic shape or a Bessel shape or a Gaussian shape or a combination of said shapes

In preferred embodiments the shape of the contour in the further section plane is circular or parabolic or at least approximately circular or parabolic. The further section plane, in particular, comprises the longitudinal axis in case of an optical fiber.

According to several implementations, after generating the concave surface profile, the processed surface, in particular the end facet, is coated with a reflective coating.

The reflective coating may for example be a metallic coating, which can for example be applied to the surface profile by means of sputtering or evaporation. The coating may also comprise a multi-layer stack of two or more different dielectric materials, for example oxides, including for example niobium pentoxide, Nb₂O₅, silicon dioxide, SiO₂, tantalum pentoxide, Ta₂O₅, hafnium dioxide, HfO₂, zirconium dioxide, ZrO₂, or aluminum oxide, Al₂O₃. Depending on the relevant wavelengths, other dielectric materials that can be used include for example indium gallium arsenide, InGaAs, aluminum gallium arsenide, AlGaAs, gallium arsenide, GaAs, aluminum arsenide, AlAs, Pb1-xEuxTe, or europium telluride, EuTe. Also meta surfaces may be used as reflective layers. According to several implementations, a first material portion of the optical substrate, for example of the optical fiber, in particular of the fiber core, is removed due to laser ablation by applying the sequence of multiple laser shots.

In particular, the wavelength of the light emitted by the QCL is selected or tuned with respect to the material to be removed and/or the optical output power of the QCL is adjusted accordingly such that ablation results. In this way, the material can be removed in a particularly controllable and efficient manner.

According to several implementations, a second material portion of the optical substrate, for example of the optical fiber, in particular of the fiber core, is melted, in particular melted and not removed, by applying the sequence of multiple laser shots.

In particular, the first material portion is removed and the second material portion is melted and then undergoes a solidification, which leads to a particularly smooth surface and allows to achieve a particularly low surface roughness, even without mechanical polishing steps being necessary. Both effects may happen automatically when applying the sequence of multiple laser shots.

According to a further aspect of the invention, a fabrication arrangement for at least partial fabrication of a mirror for an optical cavity is provided. The fabrication arrangement comprises a laser arrangement comprising a quantum cascade laser. The fabrication arrangement comprises a positioner device with a holder for taking up an optical substrate, for example an optical fiber, which is configured to move the optical substrate relative to the laser arrangement. The fabrication arrangement comprises at least one control unit, which is configured to control the positioner device to position a surface to be processed of the optical substrate, in particular an end facet of the optical fiber, in an operating plane, which is equal to or parallel to a focal plane of the laser arrangement, in particular by moving the optical substrate relative to the laser arrangement. The at least one control unit is configured to control the quantum cascade laser to apply a sequence of multiple laser shots to the surface, in particular the end facet to generate a concave surface profile of the surface in particular the end facet.

The holder may for example be a fiber holder for taking up the optical fiber. The positioner device may, in some implementations, be configured to move the optical substrate and thereby the surface to be processed laterally with respect to the stationary laser arrangement to set the lateral position of the focal point in a sequential manner to a plurality of operating points in the operating plane. Alternatively, the fabrication arrangement may comprise a further positioner device, which is configured to carry the quantum cascade laser and is configured to move the quantum cascade laser with respect to the optical substrate to set the lateral position of the focal point in the sequential manner to the plurality of operating points.

In some implementations, the fabrication arrangement comprises a deflection unit, which is arranged and configured to deflect a laser beam of the quantum cascade laser to set the lateral position of the focal point in the sequential manner to the plurality of operating points.

In particular, the at least one control unit stores an operation protocol, which defines the respective positions of the plurality of operating points and the number of shots to be applied to each of the operating points et cetera.

The at least one control unit may comprise or consist of at least one computing unit. A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

In the figures,
- Fig. 1: shows schematically an exemplary implementation of a fabrication arrangement according to the invention;
- Fig. 2: shows schematically method steps of an exemplary implementation of a method according to the invention;
- Fig. 3: shows schematically an optical cavity with a mirror generated by using an exemplary implementation of a method according to the invention;
- Fig. 4: shows schematically a further exemplary implementation of a fabrication arrangement according to the invention;
- Fig. 5: shows a first example for a plurality of operating points in a further exemplary implementation of a method according to the invention;
- Fig. 6: shows a second example for a plurality of operating points in a further exemplary implementation of a method according to the invention;
- Fig. 7: shows a third example for a plurality of operating points in a further exemplary implementation of a method according to the invention;
- Fig. 8: shows a fourth example for a plurality of operating points in a further exemplary implementation of a method according to the invention;
- Fig. 9: shows schematically a sectional view of a surface profile generated by means of a further exemplary implementation of a method according to the invention;
- Fig. 10: shows measurement results concerning a depth of a surface profile generated by means of a further exemplary implementation of a method according to the invention; and
- Fig. 11: shows schematically a sectional view of a further surface profile generated by means of a further exemplary implementation of the invention.

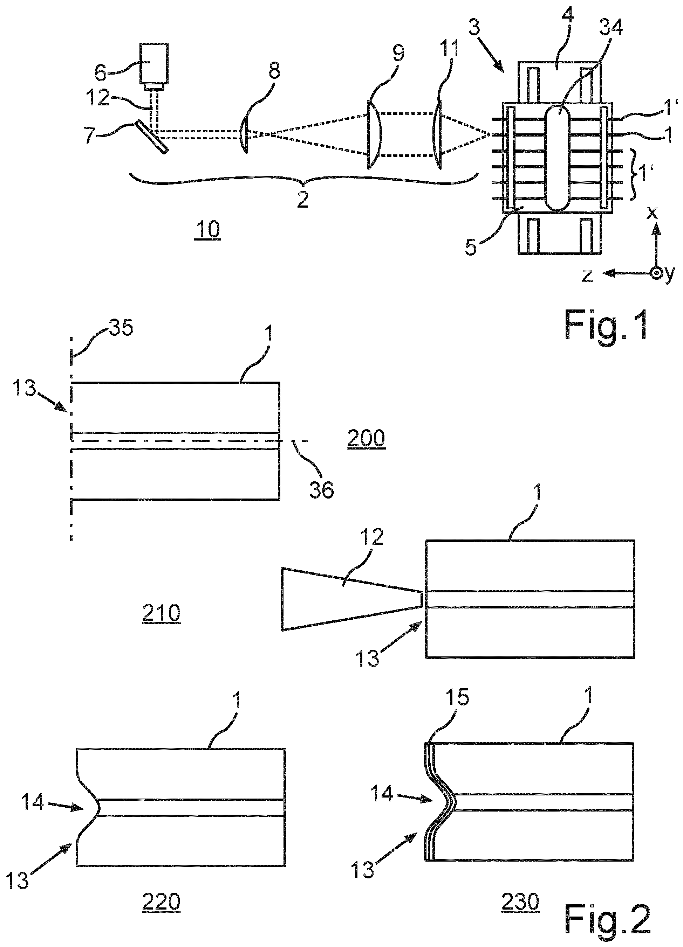

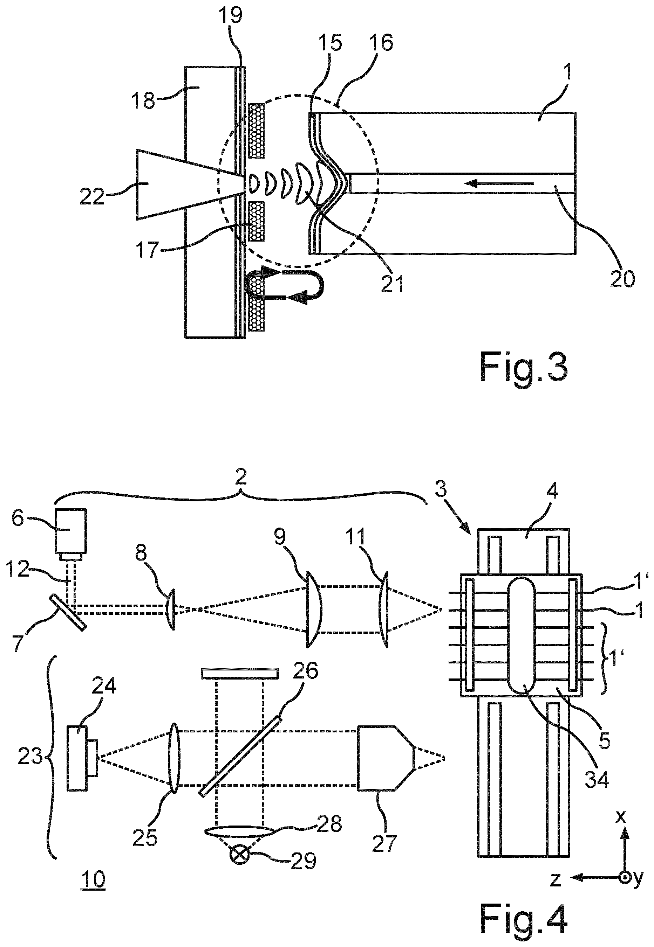

Fig. 1 shows schematically an exemplary implementation of a fabrication arrangement 10 for at least partial fabrication of a mirror for an optical cavity 16 (see Fig. 3) from an optical substrate. The optical substrate may for example be a flat substrate or an optical fiber 1. In the following it is referred to an optical fiber 1 as the optical substrate. However, the explanations may be carried over analogously to the case of a flat substrate.

The fabrication arrangement 10 comprises a laser arrangement 2, which contains a quantum cascade laser, QCL, 6. The fabrication arrangement 10 further comprises a positioner device 3 with a fiber holder 34 for taking up the optical fiber 1 and, for example, further optical fibers 1'. The positioner device 3 is configured to move the optical fiber 1 relative to the laser arrangement 2.

In some implementations, the positioner device 3 comprises a base portion 4, which may remain stationary and a slider 5 carrying the fiber holder 34. The slider 5 is for example movable in three directions X, Y, Z in order to position the optical fiber 1 relative to the laser arrangement 2. To this end, at least one control unit (not shown) of the fabrication arrangement 10 is configured to control the positioner device 3 to position an end facet 13 (see Fig. 2) of the optical fiber 1 in an operating plane 35 (see Fig. 2), which is identical to or parallel to a focal plane of the laser arrangement 2. The at least one control unit is configured to control the QCL 6, in particular the QCL 6 and the positioner device 3, to apply a sequence of multiple laser shots to the end facet 13 to generate a concave surface profile 14 (see Fig. 2) of the end facet 13.

As indicated in Fig. 1, the laser arrangement 2 may also comprise one or more mirrors 7, a beam expander, which is for example formed by two lenses 8, 9, and/or a focusing lens 11 to guide and/or form a laser beam 12 of the QCL 6 and, in particular, focus it in the focal plane. It is noted that this setup represents a nonlimiting example only. In other setups, the laser beam may for example be directed to an off-axis parabolic mirror, OAPM, and thereby focused without using lenses for this purpose.

In particular, the fabrication arrangement 10 is configured to carry out a method for at least partial fabrication of a mirror for an optical cavity 16 from an optical fiber according to the invention. A schematic method flow is shown in Fig. 2 for an exemplary implementation.

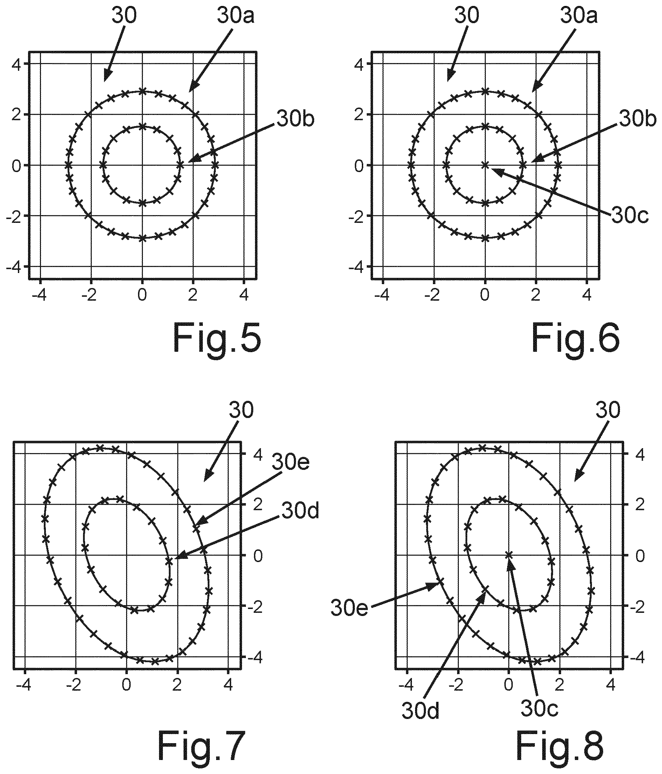

According to step 200, the end facet 13 is positioned in the operating plane 35. According to step 210, the sequence of multiple laser shots is applied to the end facet by using the QCL 6. According to some implementations, the lateral position of a focal point of the laser arrangement 2 is set in a sequential manner to a plurality of operating points 30 (see Fig. 5 to Fig. 8) in the operating plane 35 in order to generate the concave surface profile 14. Once the sequence of multiple laser shots has been applied, for example at the plurality of operating points 30, the concave surface profile 14 results in step 220. In optional step 230, a reflective coating 15 is fabricated on the end facet 13 to cover the surface profile 14.

Fig. 3 shows schematically a pair of two mirrors, one of them being formed by the surface of the end facet 13 of the optical fiber 1 and the reflective coating 15 fabricated according to a method according to the invention. The other one is a plane mirror formed for example by a plane substrate 18 coated with a further reflective coating 19. Consequently, an optical microscopic cavity 16 is formed in a volume between the opposing surfaces of the two mirrors. For analyzing samples 17, for example for analyzing their absorption and/or transmission and/or scattering properties et cetera, light 20 may be coupled into the optical cavity 16 via the optical fiber 1. The distance between the mirrors may be tuned in order to achieve resonance with the light 20 such that a cavity mode 21 may form. Parts 22 of the light 20 may be transmitted through the samples 17 and the plane mirror and may be detected by a suitable detector in order to analyze the transmission and/or absorption characteristics.

Fig. 4 shows a further exemplary implementation of a fabrication arrangement 10, which is based on the implementation shown in Fig. 1. In addition, the fabrication arrangement 10 according to Fig. 4 comprises a white light interferometer 23 with a camera 24, a white light source 29 and a Mirau objective 27. The light generated by the white light source 29 is rendered into a parallel beam by means of a condenser lens 28 and partially directed to the Mirau objective 27 via a beam splitter 26. On the way back a part of the light reaches the camera 24.

The positioner device 3 may be configured to place the slider 5 such that the end facet of the optical fiber 1 is placed in a focal plane or focal point of the Mirau objective 27. Consequently, the image taken by the camera 27 may be used to control the fabrication process. Also adaptive methods could be used, wherein applying sequences of multiple laser shots and control of the fabrication process, for example by means of the white light interferometer 23, are carried out in an alternating manner. Machine learning based approaches using the images would also be conceivable.

Fig. 5 to Fig. 8 show different possibilities how to arrange the plurality of operating points 30 in the operating plane. The scales are given in micrometers, for example. Each cross in Fig. 5 to Fig. 8 denotes a specific operating point at which one or more laser shots may be applied.

In the example of Fig. 5, the operating points 30 lie on two concentric circles 30a, 30b. In the example of Fig. 6, an additional center point 30c is positioned in the center of the concentric circles 30a, 30b. In the example of Fig. 7, the operating points 30 lie on two concentric ellipses 30e, 30d. In the example of Fig. 8, in addition to the ellipses 30e, 30d, a center point 30c of the operating points 30 lies in the center of the ellipses 30e, 30d.

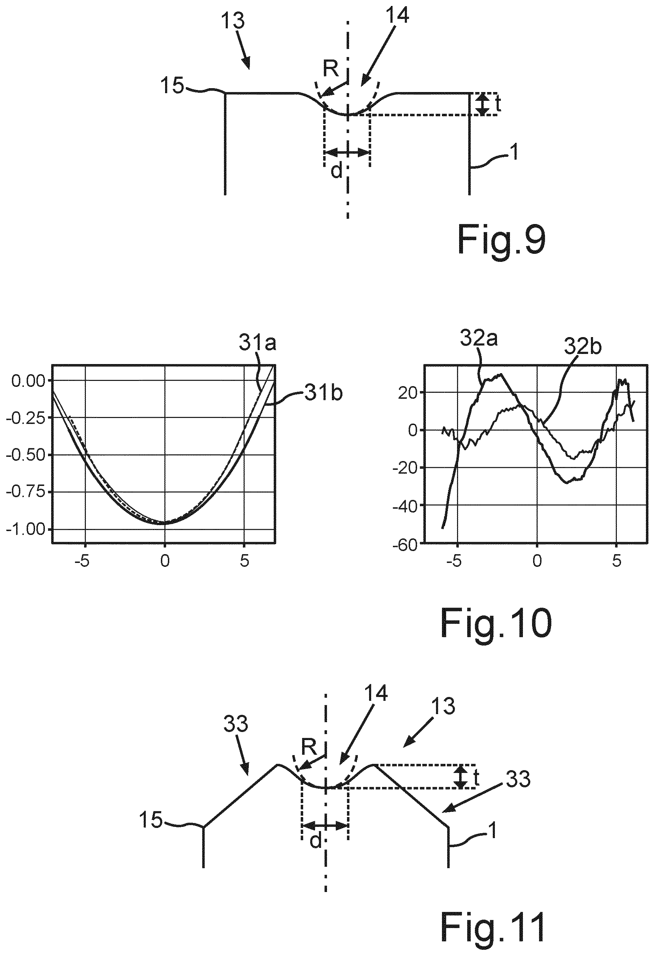

Fig. 9 shows a sectional view of an exemplary surface profile that may be generated by means of a method according to the invention. The surface profile comprises an indentation 14 on the otherwise flat end facet 13. The indentation may for example be approximately circular in a center of the indentation 14. A radius of curvature R at the center of the indentation may for example lie in the range [10 µm, 100 µm]. A lateral extent of the approximately circular portion of the indentation 14 is indicated by d and may, according to the inventive method. The depth t may for example range from a few nm to a few micrometers, for example lie in the range [1 nm, 5 µm]. The lateral extent d may also for example lie in the range of several µm to several tens of µm.

Fig. 10 shows an example of measurement results characterizing the depth of the indentation 14 as a function of the radial distance generated by means of a method according to the invention in µm. The measurements may for example be carried out using the white light interferometer 23. The measured depth lies on a curve 31a along section plane and on a curve 31b along a further section plane. The depth is given in micrometers from the plane surface of the end facet 13. The curves 32a and 32b correspond to the respective deviations of the curves 31a, 31b from a perfect spherical shape. The deviation is given in nm.

Fig. 11 shows an alternative example for the surface profile generated by means of the method according to the invention. As explained with respect to Fig. 9, the surface profile comprises an indentation 14 for example in the center of the optical fiber 1. However, instead of a plane portion of the end facet 13, a bevel 33 is generated, which extents from an outer boundary of the indentation 14 to an outer edge of the optical fiber 1.

## Claims

1. Method for at least partial fabrication of a mirror for an optical cavity (16),
wherein
- a surface (13) to be processed of an optical substrate (1) is positioned in an operating plane (35), which is identical to or parallel to a focal plane of a laser arrangement (2); and
- a concave surface profile (14, 33) of the surface (13) is generated by applying a sequence of multiple laser shots to the surface (13) by using a quantum cascade laser (6) of the laser arrangement (2).

2. Method according to claim 1, wherein the optical substrate (1) is an optical fiber (1) and the surface (13) is an end facet (13) of the optical fiber (1).

3. Method according to claim 2, wherein a fiber core of the optical fiber (1) has a diameter in the range [2µm, 600µm] or in the range [4µm, 120µm].

4. Method according to one of the preceding claims, wherein generating the concave surface profile (14, 33) comprises
- setting a lateral position of a focal point of the laser arrangement (2) in a sequential manner to a plurality of operating points (30) in the operating plane (35); and
- for each of the plurality of operating points (30), applying at least one of the multiple laser shots the surface (13).

5. Method according to claim 4, wherein
- the surface (13) and the laser arrangement (2) are moved laterally with respect to each other to set the lateral position of the focal point in the sequential manner to the plurality of operating points (30); and/or
- a laser beam of the quantum cascade laser (6) is deflected by a deflection unit of the laser arrangement (2) to set the lateral position of the focal point in the sequential manner to the plurality of operating points (30).

6. Method according to one of claims 4 or 5, wherein the plurality of operating points (30) comprises at least ten operating points or at least thirty operating points.

7. Method according to one of claims 4 to 6, wherein
- the plurality of operating points (30) lies on two or more concentric circles (30a, 30b) or on two or more concentric ellipses (30d, 30e); or
- the plurality of operating points (30) comprises a center point (30c) and the remaining of the plurality of operating points (30a, 30b) lies on two or more concentric circles (30a, 30b) or on two or more concentric ellipses (30d, 30e).

8. Method according to one of the preceding claims, wherein the concave surface profile (14, 33) comprises an indentation (14).

9. Method according to claim 8, wherein the concave surface profile (14, 33) comprises a bevel (33) surrounding the indentation (14).

10. Method according to one of claims 8 or 9, wherein a contour (31a) of the indentation (14) in a section plane, which is parallel to a normal axis (36) to the surface (13) in an unprocessed state, has a circular shape or a parabolic shape or a Bessel shape or a Gaussian shape or a combination of said shapes.

11. Method according to claim 10, wherein a further contour (31b) of the indentation (14) in a further section plane, which is parallel to the normal axis (36) and different from the section plane, has a circular shape or a parabolic shape or a Bessel shape or a Gaussian shape or a combination of said shapes.

12. Method according to one of claims 1 to 7, wherein the concave surface profile (14, 33) comprises two or more indentations (14), which are arranged according to a predefined geometric figure.

13. Method according to one of the preceding claims, wherein, after generating the concave surface profile (14, 33), the surface (13) is coated with a reflective coating (15).

14. Method according to one of the preceding claims, wherein
- a first material portion of the optical substrate (1) is removed due to laser ablation by applying the sequence of multiple laser shots; and/or
- a further material portion of the optical substrate (1) is melted by applying the sequence of multiple laser shots.

15. Fabrication arrangement (10) for at least partial fabrication of a mirror for an optical cavity (16), the fabrication arrangement (10) comprising
- a laser arrangement (2) comprising a quantum cascade laser (6);
- a positioner device (3) with a holder (34) for taking up an optical substrate (1) to be processed, which is configured to move the optical substrate (1) relative to the laser arrangement (2); and
- at least one control unit, which is configured to control the positioner device (3) to position a surface (13) to be processed of the optical substrate (1) in an operating plane (35), which is identical to or parallel to a focal plane of the laser arrangement (2), and to control the quantum cascade laser (6) to apply a sequence of multiple laser shots to the surface (13) to generate a concave surface profile (14, 33) of the surface (13).

## Patentansprüche

1. Verfahren zur zumindest teilweisen Herstellung eines Spiegels für einen optischen Resonator (16), wobei
- eine zu bearbeitende Oberfläche (13) eines optischen Substrats (1) in einer Arbeitsebene (35) positioniert wird, die identisch mit oder parallel zu einer Brennebene einer Laseranordnung (2) ist; und
- ein konkaves Oberflächenprofil (14, 33) der Oberfläche (13) durch Anwenden einer Sequenz von mehreren Laserschüssen auf die Oberfläche (13) unter Verwendung eines Quantenkaskadenlasers (6) der Laseranordnung (2) erzeugt wird.

2. Verfahren nach Anspruch 1, wobei das optische Substrat (1) eine optische Faser (1) ist und die Oberfläche (13) eine Endfacette (13) der optischen Faser (1) ist.

3. Verfahren nach Anspruch 2, wobei ein Faserkern der optischen Faser (1) einen Durchmesser im Bereich von [2 µm, 600 µm] oder im Bereich von [4 µm, 120 µm] aufweist.

4. Verfahren nach einem der vorangehenden Ansprüche, wobei das Erzeugen des konkaven Oberflächenprofils (14, 33) umfasst
- Festlegen einer lateralen Position eines Brennpunkts der Laseranordnung (2) in einer sequentiellen Weise auf eine Vielzahl von Betriebspunkten (30) in der Arbeitsebene (35); und
- Anwenden von mindestens einem der mehreren Laserschüsse auf die Oberfläche (13) für jeden der Vielzahl von Betriebspunkten (30).

5. Verfahren nach Anspruch 4, wobei
- die Oberfläche (13) und die Laseranordnung (2) mit Bezug aufeinander lateral bewegt werden, um die laterale Position des Brennpunkts in der sequentiellen Weise auf die Vielzahl von Betriebspunkten (30) festzulegen; und/oder
- ein Laserstrahl des Quantenkaskadenlasers (6) durch eine Ablenkeinheit der Laseranordnung (2) abgelenkt wird, um die laterale Position des Brennpunkts in der sequentiellen Weise auf die Vielzahl von Betriebspunkten (30) festzulegen.

6. Verfahren nach einem der Ansprüche 4 oder 5, wobei die Vielzahl von Betriebspunkten (30) mindestens zehn Betriebspunkte oder mindestens dreißig Betriebspunkte umfasst.

7. Verfahren nach einem der Ansprüche 4 bis 6, wobei
- die Vielzahl von Betriebspunkten (30) auf zwei oder mehr konzentrischen Kreisen (30a, 30b) oder auf zwei oder mehr konzentrischen Ellipsen (30d, 30e) liegt; oder
- die Vielzahl von Betriebspunkten (30) einen Mittelpunkt (30c) umfasst und die restlichen der Vielzahl von Betriebspunkten (30a, 30b) auf zwei oder mehr konzentrischen Kreisen (30a, 30b) oder auf zwei oder mehr konzentrischen Ellipsen (30d, 30e) liegen.

8. Verfahren nach einem der vorangehenden Ansprüche, wobei das konkave Oberflächenprofil (14, 33) eine Vertiefung (14) umfasst.

9. Verfahren nach Anspruch 8, wobei das konkave Oberflächenprofil (14, 33) eine Abschrägung (33) umfasst, die die Vertiefung (14) umgibt.

10. Verfahren nach einem der Ansprüche 8 oder 9, wobei eine Kontur (31a) der Vertiefung (14) in einer Schnittebene, die zu einer Normalenachse (36) zur Oberfläche (13) in einem unbearbeiteten Zustand parallel ist, eine kreisförmige Form oder eine parabolische Form oder eine Bessel-Form oder eine Gauß-Form oder eine Kombination der genannten Formen aufweist.

11. Verfahren nach Anspruch 10, wobei eine weitere Kontur (31b) der Vertiefung (14) in einer weiteren Schnittebene, die zur Normalenachse (36) parallel ist und von der Schnittebene verschieden ist, eine kreisförmige Form oder eine parabolische Form oder eine Bessel-Form oder eine Gauß-Form oder eine Kombination der Formen aufweist.

12. Verfahren nach einem der Ansprüche 1 bis 7, wobei das konkave Oberflächenprofil (14, 33) zwei oder mehr Vertiefungen (14) umfasst, die gemäß einer vordefinierten geometrischen Figur angeordnet sind.

13. Verfahren nach einem der vorangehenden Ansprüche, wobei nach dem Erzeugen des konkaven Oberflächenprofils (14, 33) die Oberfläche (13) mit einer Reflexionsbeschichtung (15) beschichtet wird.

14. Verfahren nach einem der vorangehenden Ansprüche, wobei
- ein erster Materialanteil des optischen Substrats (1) aufgrund von Laserabtragung durch das Anwenden der Sequenz von mehreren Laserschüssen entfernt wird; und/oder
- ein weiterer Materialanteil des optischen Substrats (1) durch das Anwenden der Sequenz von mehreren Laserschüssen geschmolzen wird.

15. Herstellungsanordnung (10) für die zumindest teilweise Herstellung eines Spiegels für einen optischen Resonator (16), wobei die Herstellungsanordnung (10) umfasst
- eine Laseranordnung (2) mit einem Quantenkaskadenlaser (6);
- eine Positionierungsvorrichtung (3) mit einem Halter (34) zum Aufnehmen eines zu bearbeitenden optischen Substrats (1), die dazu eingerichtet ist, das optische Substrat (1) relativ zur Laseranordnung (2) zu bewegen; und
- mindestens eine Steuereinheit, die dazu eingerichtet ist, die Positionierungsvorrichtung (3) zu steuern, um eine zu bearbeitende Oberfläche (13) des optischen Substrats (1) in einer Arbeitsebene (35) zu positionieren, die zu einer Brennebene der Laseranordnung (2) identisch oder parallel ist, und den Quantenkaskadenlaser (6) zu steuern, um eine Sequenz von mehreren Laserschüssen auf die Oberfläche (13) aufzubringen, um ein konkaves Oberflächenprofil (14, 33) der Oberfläche (13) zu erzeugen.

## Revendications

1. Procédé de fabrication au moins partielle d'un miroir pour une cavité optique (16), dans lequel
- une surface (13) à traiter d'un substrat optique (1) est positionnée dans un plan de fonctionnement (35), qui est identique ou parallèle à un plan focal d'un agencement laser (2) ; et
- un profil de surface concave (14, 33) de la surface (13) est généré par application d'une séquence de multiples tirs laser à la surface (13) au moyen d'un laser à cascade quantique (6) de l'agencement laser (2).

2. Procédé selon la revendication 1, dans lequel le substrat optique (1) est une fibre optique (1) et la surface (13) est une facette d'extrémité (13) de la fibre optique (1).

3. Procédé selon la revendication 2, dans lequel un cœur de fibre de la fibre optique (1) a un diamètre dans la plage [2 µm, 600 µm] ou dans la plage [4 µm, 120 µm].

4. Procédé selon une des revendications précédentes, dans lequel la génération du profil de surface concave (14, 33) comprend
- le réglage d'une position latérale d'un point focal de l'agencement laser (2) de manière successive sur une pluralité de points de fonctionnement (30) dans le plan de fonctionnement (35) ; et
- pour chaque point de la pluralité de points de fonctionnement (30), l'application d'au moins un des multiples tirs laser à la surface (13).

5. Procédé selon la revendication 4, dans lequel
- la surface (13) et l'agencement laser (2) sont déplacés latéralement l'un par rapport à l'autre pour régler la position latérale du point focal de manière successive sur la pluralité de points de fonctionnement (30) ; et/ou
- un faisceau laser du laser à cascade quantique (6) est dévié par une unité de déviation de l'agencement laser (2) pour régler la position latérale du point focal de manière successive sur la pluralité de points de fonctionnement (30).

6. Procédé selon une des revendications 4 et 5, dans lequel la pluralité de points de fonctionnement (30) comprend au moins dix points de fonctionnement ou au moins trente points de fonctionnement.

7. Procédé selon une des revendications 4 à 6, dans lequel
- la pluralité de points de fonctionnement (30) se trouve sur au moins deux cercles concentriques (30a, 30b) ou sur au moins deux ellipses concentriques (30d, 30e) ; ou
- la pluralité de points de fonctionnement (30) comprend un point central (30c) et les points restants de la pluralité de points de fonctionnement (30a, 30b) se trouvent sur au moins deux cercles concentriques (30a, 30b) ou sur au moins deux ellipses concentriques (30d, 30e).

8. Procédé selon une des revendications précédentes, dans lequel le profil de surface concave (14, 33) comprend un creux (14).

9. Procédé selon la revendication 8, dans lequel le profil de surface concave (14, 33) comprend un biseau (33) entourant le creux (14).

10. Procédé selon une des revendications 8 et 9, dans lequel un contour (31a) du creux (14) dans un plan de coupe qui est parallèle à un axe normal (36) à la surface (13) dans un état brut présente une forme circulaire ou une forme parabolique ou une forme de Bessel ou une forme gaussienne ou une combinaison desdites formes.

11. Procédé selon la revendication 10, dans lequel un autre contour (31b) du creux (14) dans un autre plan de coupe qui est parallèle à l'axe normal (36) et différent du plan de coupe présente une forme circulaire ou une forme parabolique ou une forme de Bessel ou une forme gaussienne ou une combinaison desdites formes.

12. Procédé selon une des revendications 1 à 7, dans lequel le profil de surface concave (14, 33) comprend au moins deux creux (14) qui sont agencés selon une figure géométrique prédéfinie.

13. Procédé selon une des revendications précédentes dans lequel, après la génération du profil de surface concave (14, 33), la surface (13) est revêtue d'un revêtement réfléchissant (15).

14. Procédé selon une des revendications précédentes, dans lequel
- une première portion de matière du substrat optique (1) est retirée du fait de l'ablation laser par application de la séquence de multiples tirs laser ; et/ou
- une autre portion de matière du substrat optique (1) est fondue par application de la séquence de multiples tirs laser.

15. Agencement de fabrication (10) pour la fabrication au moins partielle d'un miroir pour une cavité optique (16), l'agencement de fabrication (10) comprenant
- un agencement laser (2) comprenant un laser à cascade quantique (6) ;
- un dispositif de positionnement (3) avec un support (34) destiné à se saisir d'un substrat optique (1) à traiter, qui est conçu pour déplacer le substrat optique (1) par rapport à l'agencement laser (2) ; et
- au moins une unité de commande, qui est conçue pour commander le dispositif de positionnement (3) afin qu'il positionne une surface (13) à traiter du substrat optique (1) dans un plan de fonctionnement (35), qui est identique ou parallèle à un plan focal de l'agencement laser (2), et pour commander le laser à cascade quantique (6) afin qu'il applique une séquence de multiples tirs laser à la surface (13) afin de générer un profil de surface concave (14, 33) de la surface (13).
